# EUROPEAN PATENT APPLICATION

(11) **EP 2 645 787 A2**
(43) Date of publication of application: **02.10.2013**
(21) Application number: 12275149.8
(22) Date of filing: 26.09.2012
(51) Int. Cl.: H04W 52/16, H04W 52/26

(54) **Portable router with variable wi-fi transmission power, and method of reducing power consumption thereof**

(30) Priority: 30.03.2012 KR 20120032870
(71) Applicant: Samsung Electro-Mechanics Co., Ltd, Suwon, Gyunggi-Do (KR)
(72) Inventor: Park, Young Seo, Gyunggi-do (KR)
(74) Representative: Potter Clarkson LLP

(57) **Abstract**

There are provided a portable router with variable Wi-Fi transmission power and a method of reducing power consumption thereof. The portable router includes: a cellular modulation and demodulation unit converting cellular signals into cellular data packet signals; a gateway unit converting the cellular data packet signals into Wi-Fi data packet signals; a Wi-Fi modulation and demodulation unit converting the Wi-Fi data packet signals into Wi-Fi signals based on preset communication protocols; a power amplification unit amplifying transmission power of the Wi-Fi signals; and a transmission power control unit controlling a gain of the power amplification unit, depending on cellular throughput based on the cellular signals and Wi-Fi throughput based on the Wi-Fi signals.

## Description

### CROSS-REFERENCE TO RELATED APPLICATIONS

This application claims the priority of Korean Patent Application No. 10-2012-0032870 filed on March 30, 2012, in the Korean Intellectual Property Office, the disclosure of which is incorporated herein by reference.

### BACKGROUND OF THE INVENTION

### Field of the Invention

The present invention relates to a portable router with variable Wi-Fi transmission power and a method of reducing power consumption thereof, capable of reducing power consumption through the variable Wi-Fi transmission power according to throughput.

### Description of the Related Art

Generally, in wireless fidelity (Wi-Fi) communications technology, multiple-input multiple-output (MIMO) refers to spatial multiplexing increasing data throughput.

In addition, in order to increase transmission distances, diversity MIMO using a space time block code (STBC) may be used, both of which are supported by the IEEE 802.11n wireless networking standard.

Meanwhile, in a fixed Wi-Fi router continuously supplied with power, spatial multiplexing MIMO may be used to increase throughput, and the STBC diversity MIMO may be used to increase transmission distances.

Further, in a portable router that does not need to perform high speed communications or long distance transmissions and requires a reduction in power consumption, MIMO is not generally used.

However, in a portable router such as a smart phone, in which the use time of a battery is more important than data throughput or a transmission distance, the reduction of power consumption may be more useful rather than increasing data throughput or a transmission distance.

A portable router, according to the related art, converts cellular signals from a cellular network into Wi-Fi signals. In this case, a portable router may be connected to a power adaptor, or the like, and thus, may be continuously supplied with power or may not be connected to the power adaptor, or the like, and thus, may not be continuously supplied with power.

However, a portable router according to the related art controls the Wi-Fi transmissions with a preset transmission power regardless of power or the data throughput therefore, it consumes unnecessary power.

Related Art Document below relates to a dual band wireless LAN transmitter and does not disclose control of transmission power according to throughput.

### [Related Art Document]

Korean Patent Laid-Open Publication No. 10-2005-0072230

### SUMMARY OF THE INVENTION

An aspect of the present invention provides a portable router with variable Wi-Fi transmission power and a method of reducing power consumption thereof, capable of managing transmission power according to throughput and reducing power consumption according to throughput.

According to an aspect of the present invention, there is provided a portable router, including: a cellular modulation and demodulation unit converting cellular signals into cellular data packet signals; a gateway unit converting the cellular data packet signals from the cellular modulation and demodulation unit into Wi-Fi data packet signals; a Wi-Fi modulation and demodulation unit converting the Wi-Fi data packet signals from the gateway unit into Wi-Fi signals based on preset communication protocols; a power amplification unit amplifying transmission power of the Wi-Fi signals from the Wi-Fi modulation and demodulation unit; and a transmission power control unit controlling a gain of the power amplification unit, depending on cellular throughput based on the cellular signals and Wi-Fi throughput based on the Wi-Fi signals.

The gateway unit may detect the cellular throughput from the input cellular data packet signals and detect the Wi-Fi throughput from the output Wi-Fi data packet signals.

The gateway unit may determine whether a difference between the cellular throughput and the Wi-Fi throughput is lower than a preset allowable value, and when it is determined that the difference between the cellular throughput and the Wi-Fi throughput is higher than the preset allowable value, determine whether the cellular throughput is higher than the Wi-Fi throughput and whether the Wi-Fi throughput is higher than the cellular throughput.

The power amplification unit may include a plurality of first to n-th power amplifiers connected to each other in parallel for multiple-input multiple-output.

The transmission power control unit may determine whether power is supplied from the outside based on received power information and operation mode information to control the gain of the power amplification unit to have a maximum power gain corresponding to a preset maximum power when the operation mode is in a maximum power mode in which the power is supplied from the outside, determine whether the received operation mode is in a power saving mode or a variable power mode when the operation mode is not in the maximum power mode to control the gain of the power amplification unit to a power saving gain corresponding to a preset saving power when the power is not supplied from the outside and the operation mode is in the power saving mode, and variably control the gain of the power amplification unit according to a result of a comparison between the cellular throughput and the Wi-Fi throughput from the gateway unit when the power is not supplied from the outside and the operation mode is in variable power mode.

The portable router may further include an internal power supply unit storing the power from the outside to supply preset internal power, wherein the internal power supply unit provides power supply information having information on whether the power is supplied from the outside.

The transmission power control unit may include: a power determiner determining whether power is supplied from the outside based on the received power information; an operation mode determiner determining whether the operation mode is in the power saving mode or in the variable power mode based on the received operation mode information; a throughput determiner comparing the cellular throughput and the Wi-Fi throughput from the gateway unit; and a gain controller controlling the gain of the power amplification unit to the maximum power gain corresponding to the preset maximum power when the operation mode is in the maximum power mode in which the power is supplied from the outside, controlling the gain of the power amplification unit to the power saving gain corresponding to the preset saving power when the power is not supplied from the outside and the operation mode is in the power saving mode, and variably controlling the gain of the power amplification unit according to the result of the comparison between the cellular throughput and the Wi-Fi throughput when the power is not supplied from the outside and the operation mode is in the variable power mode.

The gain controller may control the gain of the power amplification unit to a gain corresponding to a preset output power when the difference between the cellular throughput and the Wi-Fi throughput is lower than the preset allowable value in the variable power mode.

The gain controller may control the gain of the power amplification unit to a gain corresponding to power one level higher than that of a current power level in the case in which the current power is between the preset saving power and the maximum power, when the difference between the cellular throughput and the Wi-Fi throughput is higher than the preset allowable value and the cellular throughput is higher than the Wi-Fi throughput, in the variable power mode.

The gain controller may control the gain of the power amplification unit to the gain corresponding to power one level lower than that of the current power level in the case in which the current power is between the preset saving power and the maximum power, when the difference between the cellular throughput and the Wi-Fi throughput is higher than the preset allowable value and the Wi-Fi throughput is higher than the cellular throughput, in the variable power mode.

According to another aspect of the present invention, there is provided a method of reducing power consumption in a portable router including a transmission power control unit controlling transmission power of Wi-Fi signals, the method including: controlling Wi-Fi transmission power gain to a maximum power gain corresponding to a preset maximum power by performing a maximum power mode when the power is supplied from the outside depending on determination as to whether whether power is supplied from the outside based on received power information and operation mode information; controlling the Wi-Fi transmission power gain to a power saving gain corresponding to a preset saving power by performing a power saving mode when the received operation mode is in a power saving mode in which the power is not supplied from the outside; and variably controlling the Wi-Fi transmission power gain according to a result of a comparison between cellular throughput and Wi-Fi throughput by performing a variable power mode when the operation mode is in the variable power mode in which the power is not supplied from the outside.

In the performing of the variable power mode, the Wi-Fi transmission power gain may be controlled to a gain corresponding to a preset output power when a difference between the cellular throughput and the Wi-Fi throughput is lower than a preset allowable value, in the variable power mode.

In the performing of the variable power mode, the Wi-Fi transmission power gain may be controlled to a gain corresponding to power one level higher than that of a current power level in the case in which the current power is between preset saving power and maximum power, when a difference between the cellular throughput and the Wi-Fi throughput is higher than the preset allowable value and the cellular throughput is higher than the Wi-Fi throughput, in the variable power mode.

In the performing of the variable power mode, the Wi-Fi transmission power gain may be controlled to a gain corresponding to power one level lower than that of the current power level in the case in which the current power is between the preset saving power and the maximum power, when the difference between the cellular throughput and the Wi-Fi throughput is higher than the preset allowable value and the Wi-Fi throughput is higher than the cellular throughput, in the variable power mode.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a block diagram of a portable router according to a first embodiment of the present invention;
FIG. 2 is a diagram for describing an operation mode according to the first embodiment of the present invention;
FIG. 3 is a block diagram of a transmission power control unit according to the first embodiment of the present invention;
FIG. 4 is a flow chart of a method of reducing power consumption in a portable router according to a second embodiment of the present invention; and
FIG. 5 is a flow chart of a process of entering a variable power mode according to the second embodiment of the present invention.

### DETAILED DESCRIPTION OF THE EMBODIMENTS

Embodiments of the present invention will now be described in detail with reference to the accompanying drawings.

The present invention should not be seen as being limited to the embodiments set forth herein and the embodiments herein may be used to assist in understanding the technical idea of the present invention. Like reference numerals designate like components having substantially the same constitution and function in the drawings of the present invention.

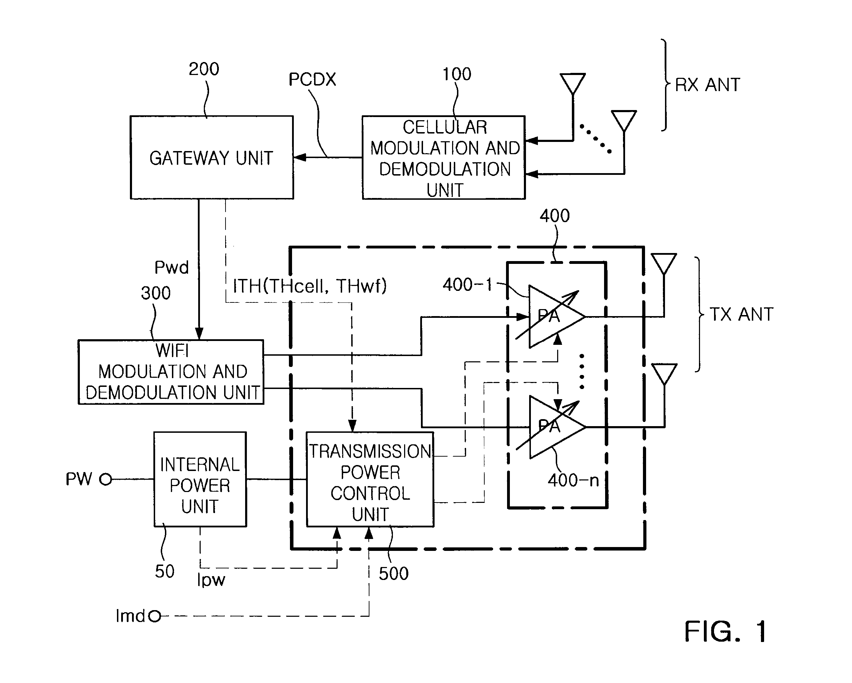

FIG. 1 is a block diagram of a portable router according to a first embodiment of the present invention.

Referring to FIG. 1, the portable router according to the first embodiment of the present invention may include a cellular modulation and demodulation unit 100 that converts cellular signals into cellular data packet signals, a gateway unit 200 that converts the cellular data packet signals from the cellular modulation and demodulation unit 100 into Wi-Fi data packet signals, a Wi-Fi modulation and demodulation unit 300 that converts the Wi-Fi data packet signals from the gateway unit 200 into Wi-Fi signals based on preset communication protocols, a power amplification unit 400 that amplifies transmission power of the Wi-Fi signals from the Wi-Fi modulation and demodulation unit 300, and a transmission power control unit 500 that controls a gain of the power amplification unit 400 depending on cellular throughput THcell, based on the cellular signals and Wi-Fi throughput THwf, based on the Wi-Fi signals.

Here, the portable routing apparatus according to the embodiment of the present invention refers to an apparatus that is not limited to a portable router but has a routing function while having mobility. For example, the portable routing apparatus may be a smart phone with a tethering or hot-spot function, or the like.

In this case, the cellular modulation and demodulation unit 100 converts the cellular signals received through a cellular antenna RX ANT into the cellular data packet signals and transmits the converted cellular data packet signals to the gateway unit 200. Here, the cellular modulation and demodulation unit 100 uses a preset demodulation scheme at the time of signal conversion.

The gateway unit 200 converts the cellular data packet signals from the cellular modulation and demodulation unit 100 into the Wi-Fi data packet signals and transmits the converted Wi-Fi data packet signals to the Wi-Fi modulation and demodulation unit 300. Here, the gateway unit 200 uses a preset packet conversion function at the time of signal conversion.

In addition, the gateway unit 200 may provide throughput information ITH based on the cellular signals and Wi-Fi signals. In this case, the gateway unit 200 may detect the cellular throughput THcell from the input cellular data packet signals and detect the Wi-Fi throughput THwf detected from the output Wi-Fi data packet signals.

Further, the gateway unit 200 determines whether a difference between the cellular throughput THcell and the Wi-Fi throughput THwf is lower than a preset allowable value and when it is determined that the difference between the cellular throughput THcell and the Wi-Fi throughput THwf is higher than the preset allowable value, the gateway unit 200 may determine whether the cellular throughput is higher than the Wi-Fi throughput and whether the Wi-Fi throughput is higher than the cellular throughput. As described above, the allowable value may be set to a value which may render the cellular throughput THcell and the Wi-Fi throughput THwf the same as or similar to each other. For example, the allowable value may be 10 Mbps, which may be changed according to characteristics of the applied router, communications environments, and the like.

In this case, the cellular throughput THcell may be compared with the Wi-Fi throughput THwf by direct measurement. Generally, the cellular throughput THcell may be compared with the Wi-Fi throughput THwf based on how much of the temporary storage space for buffering is filled before the cellular packets are changed into the Wi-Fi packets at the time of the packet conversion.

For example, when the storage space is full, it may be determined that the cellular throughput is more rapid than the Wi-Fi throughput and when the storage space is considerably empty, it may be determined that the cellular throughput is slower than the Wi-Fi throughput. This decision mechanism may be slightly different according to a queuing scheme that implements the corresponding gateway unit and thus, may also require an additional algorithm for more stable measurement.

The Wi-Fi modulation and demodulation unit 300 converts the Wi-Fi data packet signals from the gateway unit 200 into the Wi-Fi signals according to the preset communication protocols and transmits the converted Wi-Fi signals to the power amplification unit 400. Here, the Wi-Fi modulation and demodulation unit 300 uses the preset modulation scheme at the time of signal conversion.

The power amplification unit 400 amplifies the transmission power of the Wi-Fi signals from the Wi-Fi modulation and demodulation unit 300 and outputs the amplified transmission power through a transmit antenna TX ANT.

In detail, the power amplification unit 400 may include a plurality of first to n-th power amplifiers 400-1 to 400-n that are connected to each other in parallel for MIMO. In this case, the plurality of first to n-th power amplifiers 400-1 to 400-n may amplify different independent data signals and transmit the amplified data signals through each of the corresponding antenna, such that high speed data transmissions may be implemented.

Further, the transmission power control unit 500 may control a gain of the power amplification unit 400 depending on the cellular throughput THcell based on the cellular signals and the Wi-Fi throughput THwf based on the Wi-Fi signal.

Described in more detail, the transmission power control unit 500 may determine whether the power is supplied from the outside based on received power information Ipw and operation mode information Imd to control the gain of the power amplification unit 400 to a maximum power gain corresponding to the preset maximum power when the operation mode is in a maximum power mode in which power is supplied from the outside.

In addition, the transmission power control unit 500 may determine whether the received operation mode Imd is a power saving mode or a variable power mode when the operating mode is not in the maximum power mode, to control the gain of the power amplification unit 400 to a power saving gain corresponding to the preset saving power when power is not supplied from the outside and the operation mode is in a power saving mode.

Further, the transmission power control unit 500 may variably control the gain of the power amplification unit 400 according to the comparison results between the cellular throughput THcell and the Wi-Fi throughput THwf from the gateway unit 200 when power is not supplied from the outside and the operation mode is in the variable power mode.

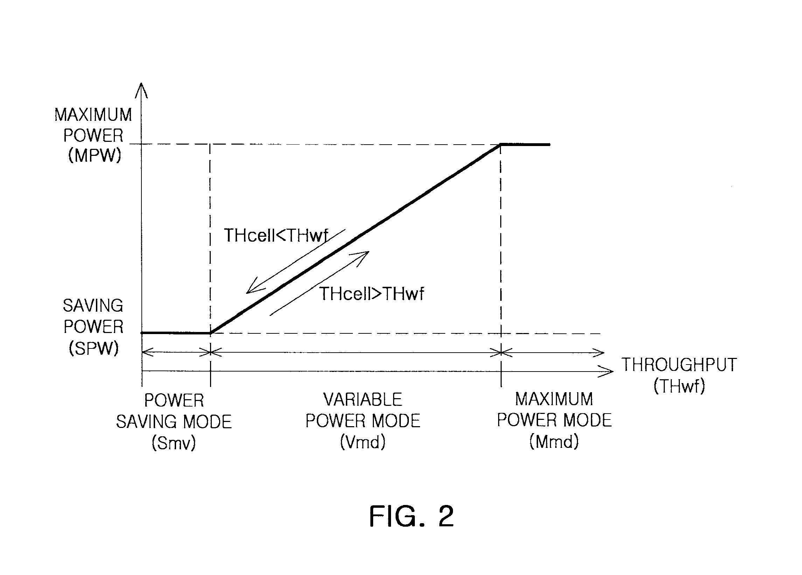

FIG. 2 is a diagram for describing an operation mode according to the first embodiment of the present invention.

Referring to FIG. 2, the portable router according to the embodiment of the present invention may enter one of a power saving mode Smd, a variable power mode Vmd, and a maximum power mode Mmd as described above.

The maximum power mode Mmd is an operation mode based on the received power information Ipw when power is supplied from the outside. For example, in the maximum power mode, the Wi-Fi transmission power gain range corresponding to the preset Wi-Fi throughput such as 100 Mbps, 150 Mbps, and the like, may be set.

The power saving mode Smd and the variable power mode Vmd are operation modes that may be performed when power is not supplied from the outside, wherein the power saving mode Smd is a mode maintained at the preset saving power when the Wi-Fi throughput THwf is higher than the cellular throughput THcell or by the selection of the user. For example, in the power saving mode, the Wi-Fi transmission power gain range corresponding to the preset Wi-Fi throughput such as 5 Mbps, 10 Mbps, and the like, may be set.

In addition, the variable power mode Vmd is an operation mode in which the Wi-Fi transmission power gain varies between the preset saving power and the maximum power according to the Wi-Fi throughput THwf and the cellular throughput THcell. For example, in the variable power mode, the Wi-Fi transmission power gain range corresponding to the preset Wi-Fi throughput range such as 5 Mbps, 150 Mbps, and the like, may be preset.

The aforementioned description may be applied to the first embodiment of the present invention and the second embodiment of the present invention and therefore, overlapping descriptions therebetween will be omitted.

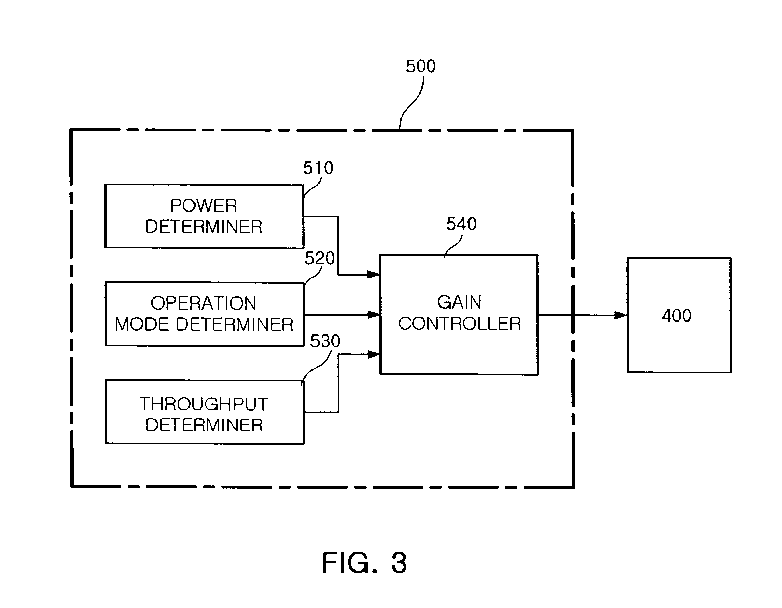

FIG. 3 is a block diagram of a transmission power control unit according to the first embodiment of the present invention.

Referring to FIG. 3, the transmission power control unit 500 may include a power determiner 510 determining whether power is supplied from the outside based on the received power information Ipw; an operation mode determiner 520 determining whether the received operation mode Imd is in the power saving mode or in the variable power mode; a throughput determiner 530 comparing the cellular throughput THcell and the Wi-Fi throughput THwf from the gateway unit 200; and a gain controller 540 in which, when the operation mode is in the maximum power mode in which power is supplied from the outside, it controls the gain of the power amplification unit 400 to a maximum power gain corresponding to the preset maximum power, when power is not supplied from the outside and the operation mode is in the power saving mode, it controls the gain of the power amplification unit 400 to the power saving gain corresponding to the preset saving power, and when power is not supplied from the outside and the operation mode is in the variable power mode, it variably controls the gain of the power amplification unit 400 according to the result of a comparison between the cellular throughput THcell and the Wi-Fi throughput THwf.

In this configuration, the power determiner 510 may determine whether power is supplied from the outside based on the received power information Ipw. In this case, the power information Ipw is information regarding whether power is supplied from the outside, which may be provided from a circuit unit that can detect whether power is supplied.

The operation mode determiner 520 may determine whether the received operation mode Imd is in the power saving mode Smd or the variable power mode Vmd. Here, the power saving mode Smd and the variable power mode Vmd in the operation mode Imd may be signals based on the selection of the user or may be determined according to the current internal power state in the state in which power is not supplied from the outside.

Unlike this, the operation mode Imd may be the maximum power mode Mmd in the state in which power is supplied from the outside.

The throughput determiner 530 may compare the cellular throughput THcell and the Wi-Fi throughput from the gateway unit 200. Here, in the cellular throughput THcell, a download rate is theoretically a maximum of 175 Mbps in the case of a 4G network such as a long term evolution (LTE) network, or the like, and therefore, the cellular throughput THcell may be higher and lower than the Wi-Fi throughput THwf, even in the case that the cellular throughput THcell is different according to the type of the cellular network and the state of the communication network.

For example, the cellular throughput THcell and the Wi-Fi throughput THwf may respectively have a rate of 50 Mbps and 75 Mbps, or the cellular throughput THcell and the Wi-Fi throughput THwf may respectively have a rate of 100 Mbps and 50 Mbps.

Further, the gain controller 540 may control the gain of the power amplification unit 400 to a maximum power gain corresponding to the preset maximum power when the operation mode is in the maximum power mode in which power is supplied from the outside, control the gain of the power amplification unit 400 to the power saving gain corresponding to the preset saving power when power is not supplied from the outside and the operation mode is in the power saving mode, and variably control the gain of the power amplification unit 400 according to the result of a comparison between the cellular throughput THcell and the Wi-Fi throughput THwf when power is not supplied from the outside and the operation mode is in the variable power mode.

Meanwhile, referring to FIG. 1, the portable router according to the embodiment of the present invention may further include an internal power supply unit 50 that provides power from the outside as preset internal power. In this case, the internal power supply unit 50 may provide the power information Ipw having information on whether power is supplied from the outside.

The gain controller 540 will be described in detail with reference to FIG. 3.

Referring to FIG. 3, the gain controller 540 may control the gain of the power amplification unit 400 to a gain corresponding to the preset output power when the difference between the cellular throughput THcell and the Wi-Fi throughput THwf is lower than the preset allowable value in the variable power mode.

In addition, the gain controller 540 may control the gain of the power amplification unit 400 to a gain corresponding to power one level higher than the current power in the case in which the level of the current power is between the preset saving power and a maximum power, when the difference between the cellular throughput THcell and the Wi-Fi throughput THwf is higher than the preset allowable value and the cellular throughput THcell is higher than the Wi-Fi throughput THwf, in the variable power mode. That is, the gain controller 540 may control the gain of the power amplification unit 400 to the gain corresponding to the maximum power by stepwise increasing the gain of the power amplification unit 400 by, for example, 5dB when the state in which the cellular throughput THcell is higher than the Wi-Fi throughput THwf is continued.

In addition, the gain controller 540 may control the gain of the power amplification unit 400 to a gain corresponding to power one level lower than that of the current power level in the case in which the current power is between the preset saving power and the maximum power, when the difference between the cellular throughput THcell and the Wi-Fi throughput THwf is higher than the preset allowable value and the Wi-Fi throughput THwf is higher than the cellular throughput THcell, in the variable power mode. That is, the gain controller 540 may control the gain of the power amplification unit 400 to a gain corresponding to the saving power by stepwise reducing the gain of the power amplification unit 400 by, for example, -5dB when the state in which the Wi-Fi throughput THwf is higher than the cellular throughput THcell is continued.

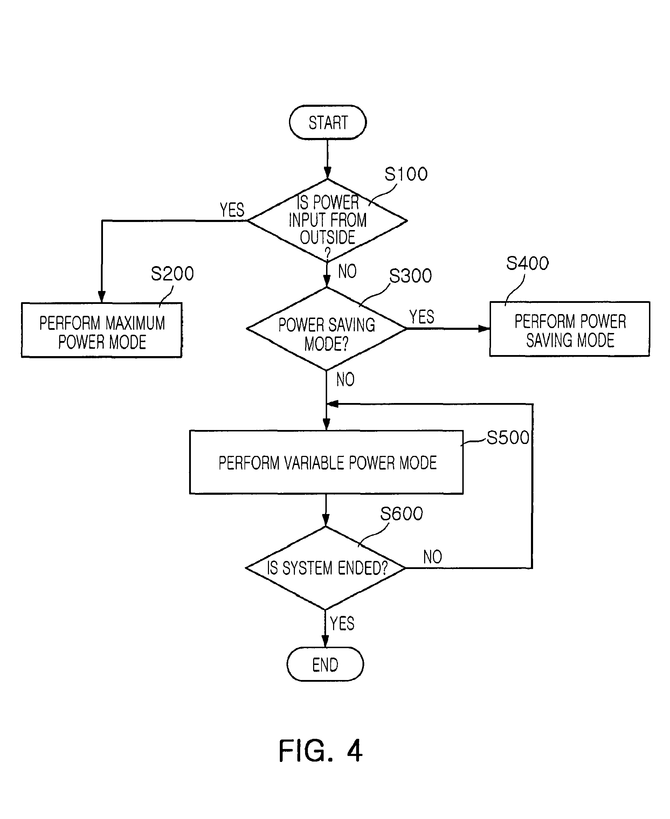

FIG. 4 is a flow chart of a method of reducing power consumption in a portable router according to a second embodiment of the present invention.

Referring to FIG. 4, the portable router to which the method of reducing power consumption in a portable router according to the second embodiment of the present invention is applied may include the modulation and demodulation unit 100, the gateway unit 200, the Wi-Fi modulation and demodulation unit 300, the power amplification unit 400, and the transmission power control unit 500 as shown in FIG. 1.

The method of reducing power consumption in a portable router according to the second embodiment of the present invention may include controlling the Wi-Fi transmission power gain to a maximum power gain corresponding to the preset maximum power by entering the maximum power mode when power is supplied from the outside, depending on the determination as to whether power is supplied from the outside based on the received power information Ipw and operation mode information Imd (S100), controlling the Wi-Fi transmission power gain to the power saving gain corresponding to the preset saving power by entering the power saving mode when the received operation mode Imd is in the power saving mode in which power is not supplied from the outside (S200), and variably controlling the Wi-Fi transmission power gain according to the result of a comparison between the cellular throughput THcell and the Wi-Fi throughput THwf by entering the variable power mode when the operation mode Imd is the variable power mode in which power is not supplied from the outside (S300).

In this case, in the controlling of the Wi-Fi transmission power gain to the maximum power gain (S100), the maximum power mode is entered when power is supplied from the outside depending on the determination as to whether power is supplied based on the received power information Ipw, such that the Wi-Fi transmission power gain may be controlled to the maximum power gain corresponding to the preset maximum power. That is, as described above, the gain of the power amplification unit 400 may be controlled to the maximum power gain.

Next, in the controlling of the Wi-Fi transmission power gain to the power saving gain (S200), when the received operation mode Imd is in the power saving mode in which power is not supplied from the outside, the power saving mode is entered, such that the Wi-Fi transmission power gain may be controlled to the power saving gain corresponding to the preset saving power. That is, as described above, the gain of the power amplification unit 400 may be controlled to the power saving gain.

Further, in the variable controlling (S300), when the operation mode Imd is the variable power mode in which power is not supplied from the outside, the variable power mode is entered, such that the Wi-Fi transmission power gain may be variably controlled according to the result of a comparison between the cellular throughput THcell and the Wi-Fi throughput THwf. That is, as described above, the gain of the power amplification unit 400 may be variably controlled within the preset gain range.

In this case, the variable controlling (S300) may be continuously performed when system ending (S600) is not performed.

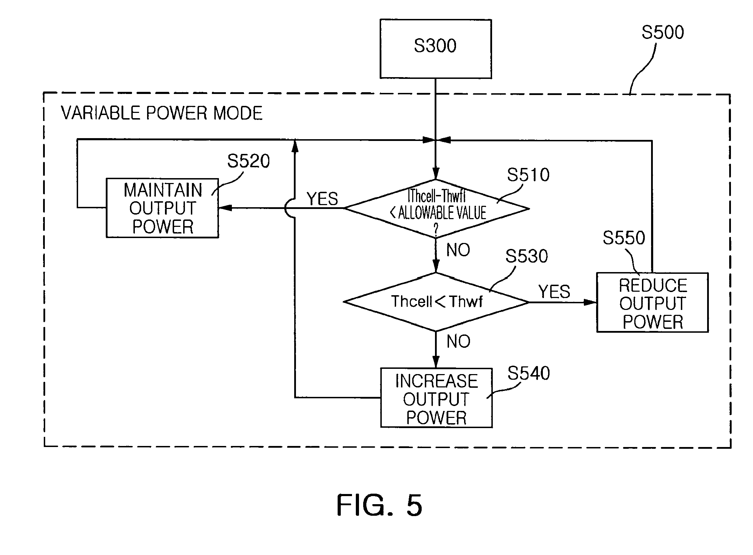

FIG. 5 is a flow chart of a process of entering a variable power mode according to the second embodiment of the present invention.

Referring to FIG. 5, in the variable power mode (S500), in the variable power mode, when the difference between the cellular throughput THcell and the Wi-Fi throughput THwf is lower than the preset allowable value, the Wi-Fi transmission power gain may be controlled to the gain corresponding to the preset output power (S510 and S520).

In this case, as described above, the allowable value may be set to a value which may allow the cellular throughput THcell and the Wi-Fi throughput THwf to be the same as or similar to each other. For example, the allowable value may be 10 Mbps.

In addition, in the entering of the variable power mode (S500), when the difference between the cellular throughput THcell and the Wi-Fi throughput THwf is higher than the preset allowable value, it is determined whether the Wi-Fi throughput THwf is higher than the cellular throughput THcell (S530) and when it is determined that the cellular throughput THcell is higher than the Wi-Fi throughput THwf, the Wi-Fi transmission power gain may be controlled to a gain corresponding to the power one level higher than that of the current power level when the current power is between the preset saving power and the maximum power (S540).

That is, in the entering of the variable power mode (S500), when the state in which the cellular throughput THcell is higher than the Wi-Fi throughput THwf is continued, the gain of the power amplification unit 400 stepwise increases by, for example, 5dB and may be controlled to the gain corresponding to the maximum power.

In addition, in the entering of the variable power mode (S500), when the difference between the cellular throughput THcell and the Wi-Fi throughput THwf is higher than the preset allowable value, and in the determining whether the Wi-Fi throughput THwf is higher than the cellular throughput THcell (S530), when it is determined that the Wi-Fi throughput THwf is higher than the cellular throughput THcell; the Wi-Fi transmission power gain may be controlled to the gain corresponding to the power one level lower than that of the current power level when the current power is between the preset saving power and the maximum power (S550).

That is, in the entering of the variable power mode (S500), when it is determined that the state in which the Wi-Fi throughput THwf is higher than the cellular throughput THcell is continued, the gain of the power amplification unit 400 is stepwise reduced by, for example, -5dB and may be controlled to the gain corresponding to the saving power.

As described above, the embodiment of the present invention is provided to reduce the power consumption by using a commercial Wi-Fi chipset rather than increasing data throughput or a transmission distance, and when power is not supplied from the outside, Wi-Fi transmission power consumption in a portable router may be reduced by appropriately controlling the transmission power of the Wi-Fi signals according to the throughput of the cellular signals and the Wi-Fi signals. Therefore, the use time of the battery of the portable router may be increased.

As set forth above, according to the embodiments of the present invention, it is possible to reduce the power consumption in the portable router by appropriately controlling the transmission power of the Wi-Fi signals according to the throughput of the cellular signals and the Wi-Fi signals when power is not supplied from the outside.

While the present invention has been shown and described in connection with the embodiments, it will be apparent to those skilled in the art that modifications and variations may be made without departing from the spirit and scope of the invention as defined by the appended claims.

## Claims

1. A portable router, comprising:
a cellular modulation and demodulation unit converting cellular signals into cellular data packet signals;
a gateway unit converting the cellular data packet signals from the cellular modulation and demodulation unit into Wi-Fi data packet signals;
a Wi-Fi modulation and demodulation unit converting the Wi-Fi data packet signals from the gateway unit into Wi-Fi signals based on preset_communication protocols;
a power amplification unit amplifying transmission power of the Wi-Fi signals from the Wi-Fi modulation and demodulation unit; and
a transmission power control unit controlling a gain of the power amplification unit, depending on cellular throughput based on the cellular signals and Wi-Fi throughput based on the Wi-Fi signals.

2. The portable router of claim 1, wherein the gateway unit detects the cellular throughput from the input cellular data packet signals and detects the Wi-Fi throughput from the output Wi-Fi data packet signals.

3. The portable router of claim 2, wherein the gateway unit determines whether a difference between the cellular throughput and the Wi-Fi throughput is lower than a preset allowable value and when it is determined that the difference between the cellular throughput and the Wi-Fi throughput is higher than the preset allowable value, determines whether the cellular throughput is higher than the Wi-Fi throughput and whether the Wi-Fi throughput is higher than the cellular throughput.

4. The portable router of claim 3, wherein the power amplification unit includes a plurality of first to n-th power amplifiers connected to each other in parallel for multiple-input multiple-output.

5. The portable router of claim 4, wherein the transmission power control unit determines whether power is supplied from the outside based on received power information and operation mode information to control the gain of the power amplification unit to have a maximum power gain corresponding to a preset maximum power when the operation mode is in a maximum power mode in which the power is supplied from the outside, determines whether the received operation mode is in a power saving mode or a variable power mode when the operation mode is not in the maximum power mode to control the gain of the power amplification unit to a power saving gain corresponding to a preset saving power when the power is not supplied from the outside and the operation mode is in the power saving mode, and variably controls the gain of the power amplification unit according to a result of a comparison between the cellular throughput and the Wi-Fi throughput from the gateway unit when the power is not supplied from the outside and the operation mode is in variable power mode.

6. The portable router of claim 4, wherein the transmission power control unit includes:
a power determiner determining whether the power is supplied from the outside based on the received power information;
an operation mode determiner determining whether the operation mode is in the power saving mode or in the variable power mode based on the received operation mode information;
a throughput determiner comparing the cellular throughput and the Wi-Fi throughput from the gateway unit; and
a gain controller controlling the gain of the power amplification unit to the maximum power gain corresponding to the preset maximum power when the operation mode is in the maximum power mode in which the power is supplied from the outside, controlling the gain of the power amplification unit to the power saving gain corresponding to the preset saving power when the power is not supplied from the outside and the operation mode is in the power saving mode, and variably controlling the gain of the power amplification unit according to the result of the comparison between the cellular throughput and the Wi-Fi throughput when the power is not supplied from the outside and the operation mode is in the variable power mode.

7. The portable router of claim 5, further comprising an internal power supply unit storing the power from the outside to supply preset internal power,
wherein the internal power supply unit provides power supply information having information on whether the power is supplied from the outside.

8. The portable router of claim 6, wherein the gain controller controls the gain of the power amplification unit to a gain corresponding to a preset output power when the difference between the cellular throughput and the Wi-Fi throughput is lower than the preset allowable value in the variable power mode.

9. The portable router of claim 8, wherein the gain controller controls the gain of the power amplification unit to a gain corresponding to power one level higher than that of a current power level in the case in which the current power is between the preset saving power and the maximum power, when the difference between the cellular throughput and the Wi-Fi throughput is higher than the preset allowable value and the cellular throughput is higher than the Wi-Fi throughput, in the variable power mode.

10. The portable router of claim 9, wherein the gain controller controls the gain of the power amplification unit to the gain corresponding to power one level lower than that of the current power level in the case in which the current power is between the preset saving power and the maximum power, when the difference between the cellular throughput and the Wi-Fi throughput is higher than the preset allowable value and the Wi-Fi throughput is higher than the cellular throughput, in the variable power mode.

11. A method of reducing power consumption in a portable router including a transmission power control unit controlling transmission power of Wi-Fi signals, the method comprising:
controlling Wi-Fi transmission power gain to a maximum power gain corresponding to a preset maximum power by performing a maximum power mode when power is supplied from the outside depending on determination as to whether the power is supplied from the outside based on received power information and operation mode information;
controlling the Wi-Fi transmission power gain to a power saving gain corresponding to a preset saving power by performing a power saving mode when the received operation mode is in a power saving mode in which the power is not supplied from the outside; and
variably controlling the Wi-Fi transmission power gain according to a result of a comparison between cellular throughput and Wi-Fi throughput by performing a variable power mode when the operation mode is in the variable power mode in which the power is not supplied from the outside.

12. The method of claim 11, wherein in the performing of the variable power mode, the Wi-Fi transmission power gain is controlled to a gain corresponding to a preset output power when a difference between the cellular throughput and the Wi-Fi throughput is lower than a preset allowable value, in the variable power mode.

13. The method of claim 12, wherein in the performing of the variable power mode, the Wi-Fi transmission power gain is controlled to a gain corresponding to power one level higher than that of a current power level in the case in which the current power is between preset saving power and maximum power, when the difference between the cellular throughput and the Wi-Fi throughput is higher than the preset allowable value and the cellular throughput is higher than the Wi-Fi throughput, in the variable power mode.

14. The method of claim 13, wherein in the performing of the variable power mode, the Wi-Fi transmission power gain is controlled to a gain corresponding to power one level lower than that of the current power level in the case in which the current power is between the preset saving power and the maximum power, when the difference between the cellular throughput and the Wi-Fi throughput is higher than the preset allowable value and the Wi-Fi throughput is higher than the cellular throughput, in the variable power mode.
